# EUROPÄISCHE PATENTANMELDUNG

(11) **EP 4 342 672 A1**
(43) Veröffentlichungstag der Anmeldung: **27.03.2024**
(21) Anmeldenummer: 22197424.9
(22) Anmeldetag: 23.09.2022
(51) Int. Cl.: B33Y 80/00, H02K 1/02, H02K 1/24, H02K 15/02

(54) **ADDITIV HERGESTELLTES MAGNETBLECH, BLECHPAKET UND ELEKTRISCHE MASCHINE**

(71) Anmelder: Siemens Aktiengesellschaft, 80333 München (DE)
(72) Erfinder: SCHUH, Carsten, 85598 Baldham (DE); VOLLMER, Rolf, 36129 Gersfeld (DE)
(74) Vertreter: Siemens Patent Attorneys

(57) **Zusammenfassung**

Die Erfindung betrifft ein additiv hergestelltes rotationssymmetrisches Magnetblech (2), für ein Blechpaket (4) einer elektrischen Maschine (6), wobei mindestens zwei in planarer Erstreckung voneinander getrennte Materialkomponenten (8, 10) vorliegen
- eine erste Materialkomponente (8) und eine zweite Materialkomponente (10) wobei
-die Materialkomponenten (8, 10) an einer Grenzfläche (12) aufeinander treffen die bei einer Betrachtung senkrecht zur Blechebene eine Grenzlinie (14) bildet
dadurch gekennzeichnet, dass
- Materialvertiefungslinien (16) in das Magnetblech (2) eingebracht sind, die von der ersten Materialkomponente (8) über die Grenzlinie (14) zur zweiten Materialkomponente (10) verlaufen
und deren Verlaufswinkel α bezüglich der Tangente (18) der Grenzlinie (14), an der die Materialvertiefungslinie (16) die Grenzlinie (14) schneidet, zwischen 45° und 135° liegt.

## Beschreibung

Die Erfindung betrifft ein additiv hergestelltes Magnetblech nach dem Patentanspruch 1, ein Blechpaket nach Patentanspruch 13 sowie Verfahren zur Herstellung eine elektrische Maschine nach Patentanspruch 15.

Ein neues Verfahren zur Herstellung von Magnetblechen für elektrische Maschinen stellt der Sieb- oder der Schablonendruck dar. Hierbei wird mittels einer Schablone, bei der die offenen Bereiche auch mit einem Sieb versehen sein können, eine Druckpaste auf ein Substrat gedruckt. Man spricht hierbei von Schablonendruck oder Siebdruck, wobei der Schablonendruck ein Oberbegriff des Siebdrucks ist. Die Druckpaste enthält neben Lösungsmitteln und / oder Bindemitteln Metallpulver, die funktional im späteren Bauteil wirken. Durch die Siebdrucktechnik wird ein Grünkörper hergestellt, der nach einer weiteren thermischen Behandlung zunächst in der Regel entbindert wird und anschließend bei einer höheren Temperatur einem Sinterprozess zugeführt wird, wobei die metallischen Pulverkörner so miteinander versintern, dass ein strukturiertes Blech, das Magnetblech, entsteht.

Zur Erzielung einer höheren mechanischen Festigkeit solcher Bleche, insbesondere bei hohen Drehzahlen von Rotoren elektrischer Maschinen, gewinnt nun die Herstellbarkeit von Zweikomponenten-Magnetblechen immer mehr an Bedeutung. Ein Beispiel hierfür ist in der EP 3723249 A1 beschrieben. Ferner seien hierbei noch die EP 3 629 453 A1, EP 3 932 591 A1 und die EP 3 725 435 A1 zu nennen. Ein grundsätzliches Problem bei derartigen Zweikomponenten-Magnetblechen, die im Schablonendruckverfahren hergestellt werden, besteht darin, dass die unterschiedlichen Materialien, wenn sie einerseits gute magnetische Eigenschaften haben und auf der anderen Seite eine hohe Festigkeit aufweisen, in der Regel unterschiedliche thermische Ausdehnungskoeffizienten aufweisen. So hat beispielsweise ein hochfester Stahl, der zur mechanischen Festigkeit des Magnetblechs eine Teilkomponente darstellt, einen Ausdehnungskoeffizienten von 16 × 10⁻⁶ K⁻¹. Ein weiterer weichmagnetischer Werkstoff hat dabei in einer Temperaturspanne zwischen 0 und 100° C einen thermischen Ausdehnungskoeffizienten, der zwischen 10 - 12 × 10⁻⁶ K⁻¹ liegt. Bei der gemeinsamen Sinterung derartig unterschiedlicher Materialkomponenten bzw. Materialpaarungen in einem Grünkörper zu einem Magnetblech kommt es insbesondere bei der Abkühlung von den Sintertemperaturen zur Raumtemperatur aufgrund dieser unterschiedlichen thermischen Ausdehnungskoeffizienten zur Ausbildung von hohen mechanischen Spannungen in den Verbindungs- bzw. Nahtbereichen zwischen diesen Materialkomponenten. Dies kann zu Verwölbungen oder zu Rissen oder insgesamt zu mechanischen Spannungen im Magnetblech führen, die die mechanischen oder magnetischen Eigenschaften deutlich verschlechtern können.

Die Aufgabe der Erfindung besteht darin, ein Magnetblech bereitzustellen, sowie daraus ein Blechpaket und eine elektrische Maschine zu generieren, bei denen das Magnetblech gegenüber dem Stand der Technik bei Anwendung von mindestens zwei Materialkomponenten innerhalb des Magnetblechs eine höhere Festigkeit sowie weniger intrinsische Spannungen aufweist. Die Lösung der Aufgabe besteht in einem Magnetblech nach Anspruch 1, in einem Blechpaket nach Anspruch 13, sowie in einer elektrischen Maschine nach Anspruch 15.

Das erfindungsgemäße additiv hergestellte rotationssymmetrische Magnetblech für ein Blechpaket einer elektrischen Maschine weist dabei folgende Merkmale auf. Es sind mindestens zwei in planarer Erstreckung voneinander getrennte Materialkomponenten vorhanden. Dabei handelt es sich um eine erste Materialkomponente und eine zweite Materialkomponente. Die beiden Materialkomponenten treffen an einer Grenzfläche aufeinander, die bei einer Betrachtung senkrecht zur Blechebene eine Grenzlinie bildet. Dabei sind Materialvertiefungslinien in das Magnetblech eingebracht, die von der ersten Materialkomponente über die Grenzlinie zur zweiten Materialkomponente verlaufen. Dabei ist ein Verlaufswinkel für den Verlauf der Materialvertiefungslinien definiert, der sich an einer Tangente der Grenzlinie orientiert, und zwar der Tangente an dem Punkt, an dem die Materialvertiefungslinie die Grenzlinie schneidet. Dieser Winkel α beträgt bezüglich der Tangente mindestens 45° und höchstens 135°.

Wie bereits einleitend erwähnt, treten die höchsten Spannungen in einem zweikomponentigem Magnetblech, die auf die unterschiedlichen Ausdehnungskoeffizienten der einzelnen Komponenten zurückgehen, insbesondere bei der Abkühlung aus der Sinterphase auf. Selbstverständlich treten auch thermische Spannungen während des Betriebs der elektrischen Maschine durch erhöhte Betriebstemperaturen auf, der Abkühlungsprozess bei der Herstellung, also bei der Sinterung des Magnetblechs führt jedoch zu den höchsten thermischen Verspannungen. Um diese zu reduzieren oder gar zu vermeiden, werden die beschriebenen Materialvertiefungslinien in das Magnetblech so eingebracht, dass sie über die Grenzlinie zwischen den einzelnen Materialkomponenten verlaufen.

Somit werden Zonen geschaffen, in denen bei einem ursprünglich vorgegebenen Spannungszustand - der durch die Temperaturänderung oder durch den Abkühlungsprozess aufgrund der unterschiedlichen thermischen Ausdehnungskoeffizienten hervorgerufen wird - die damit einhergehenden realen, also absoluten Dehnungen je nach Ausdehnungskoeffizienten größer oder kleiner ausfallen. Dies führt dazu, dass im Mittel der residuale, mittlere Spannungszustand im Vergleich zur nicht strukturierten Übergangsbereichen verringert werden kann. Die Wirkung dieser Strukturierungen mittels Materialvertiefungslinien Übergangsbereich zwischen Materialkomponenten, kann daher mit einem Federelement aus der Mechanik verglichen werden.

Die Materialvertiefungslinien verlaufen dabei bevorzugt nahezu senkrecht zu der Tangente, die an dem Schnittpunkt der Materialvertiefungslinie zur Grenzlinie anliegt. Je nach Verlauf der Grenzlinie können jedoch Abweichungen von diesem senkrechten Verlauf zur Tangente zweckmäßig sein. Diese Abweichungen liegen bezüglich des senkrechten Verlaufs, also des 90° Verlauf zur Tangente zwischen 45° und 135° bezüglich der Tangente.

Unter dem Begriff Materialvertiefungslinie wird ganz allgemeine eine Linie verstanden, die ein höheres Aspekt Verhältnis, bevorzugt größer als fünf aufweist, sie muss dabei jedoch nicht eine exakt gezogene Linie sein. Auch eine bauchige, ovale Verlaufsform oder eine Zickzackform entlang ihrer Erstreckung bei der Überschreitung der Grenzlinie kann dabei zweckmäßig sein. Auch der Querschnitt der Materialvertiefungslinie muss dabei nicht exakt rechteckig sein, auch hier können bauchige oder länglich rechteckige bzw. im Flächenverhältnis breit rechteckige Querschnitte zweckmäßig sein. Dabei ist anzumerken, dass bei Magnetblechen, die üblicherweise eine Dicke von 100 bis 200 µm aufweisen, aufgrund von prozesstechnischen Toleranzen bei der Darstellung eines definierten Querschnitts bzw. einer bestimmten Länge und Breite der Linie ohnehin Zugeständnisse an die Genauigkeiten gemacht werden müssen.

Die Materialvertiefungslinien können dabei vollständig durch Stanzungen des Magnetbleches hergestellt sein, es können jedoch auch Anritzungen, Ausfräsungen oder Deformationsvertiefungen sein.

Die genaue Anzahl der Materialvertiefungslinien, ihre Dichte entlang der Grenzlinie, ihre Länge, ihre Ausrichtung bezüglich der beschriebenen Tangente zur Grenzlinie und ihre Querschnittsstrukturierung hängen sehr stark von den angewendeten Materialkomponenten und somit von deren Ausdehnungskoeffizienten ab. Ferner werden diese Parameter auch durch das Layout, also das Design des Magnetbleches erheblich beeinflusst.

Es hat sich in mehreren Berechnungen als zweckmäßig erwiesen, dass die Materialvertiefungslinien eine Länge aufweisen, die zwischen 1 mm und 10 mm liegen. Die Tiefe der Materialvertiefungslinien ist wie beschrieben zwischen vollständige Durchstanzung und 10-prozentiger Eintiefung zweckmäßig, sodass insbesondere diese Größe stark von den beschriebenen Begebenheiten, Layout und Materialkomponenten abhängig ist. Der Abstand der Materialvertiefungslinien oder der Materialerhöhungslinien ist bevorzugt kleiner oder gleich als ihre Länge. Wenn die Länge beispielsweise 5 mm beträgt, sollte der Abstand bevorzugt zwischen 0,5 mm und 5 mm betragen.

Um diese beschriebenen Größen für das jeweilig verwendete Magnetblech genau zu bestimmen, wird bei der Konstruktion des Magnetbleches, bei Kenntnis der thermischen Ausdehnungskoeffizienten da verwendeten Materialkomponenten und bei Kenntnis des magnetisch und mechanisch optimierten Layouts mittels einer gängigen Finite Elemente Methode an den Grenzlinien die Anzahl, die Dichte und die Ausgestaltung der Materialvertiefungslinien genau bestimmt, sodass diese im Herstellungsverfahren gemäß der Finite Elemente Berechnung entsprechend eingebracht werden können.

Die positive Wirkung der Materialvertiefungslinien, sowie die Tatsache, dass entlang dieses geschwächten Bereiches die absolute Ausdehnung der Materialien geringer ist und somit thermische Spannungen abgebaut werden, bzw. gar nicht erst auftreten, wird jedoch auch durch eine negative Wirkung, nämlich eine reine Schwächung des Materials im Bereich der Grenzlinie begleitet. Bei dem Einbringen der Materialvertiefungslinien handelt es sich somit um einen Kompromiss zwischen der Steigerung der Festigkeit aufgrund der Reduktion der thermischen Spannungen und einer gleichzeitig auftretenden Materialschwächung. Wenngleich die negative Wirkung der Materialschwächung deutlich geringer ist als die positive Wirkung der Spannungsreduktion. Dieser Kompromiss stellt eine Optimierungsaufgabe dar, die ebenfalls durch das beschriebene Verfahren unter Anwendung der Finiten Elemente Methode gelöst werden kann.

Eine weitere Möglichkeit, dieser Materialschwächung gezielt zu entgehen, besteht in einer gleichzeitigen Materialerhöhung bzw. das Einbringen von Materialerhöhungslinien, die analog ausgerichtet sind wie die Materialvertiefungslinien. Sie überschreiten ebenfalls die Grenzlinie und weisen den gleichen Winkel α, der als α' bezeichnet wird, bezüglich der Tangente auf, der zwischen 45° und 135° liegt.

Diese Materialerhöhungslinien, die beispielsweise durch Materialauftrag oder auch durch ein deformierendes Einprägen von der Gegenseite des Magnetbleches erzeugt werden können, wird insbesondere bei der Zusammensetzung des gesamten Blechpaketes aus einzelnen Magnetblechen noch eingegangen werden. Es ist nämlich zweckmäßig, wenn Materialerhöhungslinien eines Magnetbleches in Materialvertiefungslinien eines Magnetblechstapel des Blechpaketes darauffolgenden Magnetbleches eingreifen. Somit wird die Materialschwächung an dieser Stelle ausgeglichen und die Wirkung der Materialvertiefungslinien bezüglich des thermischen Ausdehnungskoeffizienten bleiben bestehen. Um eine Verwölbung oder Deformation solcher Magnetbleche beim Sintern und im Betrieb zu verhindern, ist dabei ein rotationssymmetrisches Design des Magnetbleches, insbesondere eines Übergangsbereiches entlang der Grenzlinie bezüglich einer Mittelachse des Magnetbleches vorteilhaft. Die Mittelachse des Magnetbleches fällt dabei auch mit einer Rotationsachse eines Rotors, der das spätere Blechpaket enthält, zusammen. Unter rotationssymmetrisch wird dabei eine Punktsymmetrie eines Radius bezüglich eines Mittelpunktes verstanden, bei einem Rotor bezüglich der des Schnittpunkts der Mittelachse.

Ferner ist es vorteilhaft, wenn die Grenzlinie durch eine Materialkomponente so ausgeformt ist, dass sie eine Hinterschneidung in der anderen Materialkomponente bildet. Diese Hinterschneidung sollte jedoch nur durch eine Materialkomponente in die jeweils andere Materialkomponente erfolgen und nicht abwechseln. Ferner ist es dabei zweckmäßig, wenn die Materialkomponente mit dem höheren thermischen Ausdehnungskoeffizienten die Hinterschneidung in der Materialkomponente mit dem geringen Ausdehnungskoeffizienten bildet, da hierdurch ein Anziehungsprozess zwischen den Komponenten auftritt. Dieser würde sich bei beidseitigen Hinterschneidungen gegenseitig behindern und gegebenenfalls weitere Spannungen hervorrufen.

Das Magnetblech umfasst, wie beschrieben, mindestens zwei verschiedene Materialkomponenten, die sich insbesondere in ihren mechanischen und magnetischen Eigenschaften unterscheiden. Auf diese Weise kann gezielt in bestimmten Bereichen des Magnetbleches auf die dort benötigten technischen Eigenschaften eingegangen werden. Die erste Materialkomponente weist daher eine Eisenlegierung auf, die zumindest 25 Vol.% ein austenitisches Gefüge aufweist. Dieses austenitische Gefüge, das sich insbesondere durch hochlegierte Stähle erzielen lässt, weist eine sehr hohe Festigkeit, insbesondere Zug- und Biegefestigkeit auf.

Im Gegensatz dazu weist die zweite Materialkomponente eine Eisenlegierung auf, die mindestens 95 Gew.%, insbesondere mindestens 97 Gew.% Eisen umfasst. Bevorzugt handelt es sich bei der zweiten Materialkomponente um Reineisen, das sehr gute magnetische Eigenschaften, insbesondere weichmagnetische Eigenschaften aufweist und sich sehr gut in Form einer Hysterese ummagnetisieren lässt. Dabei sei darauf hingewiesen, dass die Angaben bezüglich des austenitischen Gefüges in Vol.% abgegeben werden und die Legierungsangaben in Gew.%. Dies liegt daran, dass sich Gefügestrukturen mikroskopisch in Schliffbildern anschaulicher in Vol.% angeben lassen und die Legierungsbestandteile im Weiteren in Gew.% angegeben werden, was technisch üblich ist und bei der Zusammensetzung einer Legierung eindeutige Herstellungsanweisungen darstellen.

Die zweite Materialkomponente, die sehr gute weichmagnetische Eigenschaften aufweist, weist dabei wiederum eine bevorzugte ferritische und/oder martensitische Gefügestruktur auf.

Die erste Materialkomponente, die die hohe mechanische Festigkeit aufweist und die Festigkeit des gesamten Magnetbleches bei rotatorischen Bewegungen gewährleistet, ist wiederum bevorzugt eine Eisen-Chrom-Nickel-Legierung. Diese weist wiederum bevorzugt einen Chromanteil auf, der zwischen 22 Gew.% und 28 Gew.%, insbesondere zwischen 24 Gew.% und 26 Gew.% beträgt. Ferner weist der Nickelanteil der beschriebenen Eisen-Chrom-Nickel-Legierung einen Anteil auf, der zwischen 4 Gew.% und 10 Gew.%, insbesondere zwischen 6 Gew.% und 8 Gew.% beträgt.

Ein weiterer Bestandteil der Erfindung ist ein Blechpaket nach Patentanspruch 13. Dieses Blechpaket für einen Rotor einer elektrischen Maschine umfasst eine Mehrzahl von Magnetblechen der vorangegangenen Patentansprüche. Dabei hat es sich insbesondere als zweckmäßig herausgestellt, dass die Magnetbleche des Blechpaketes in der Art gestapelt sind, dass Materialvertiefungslinien eines Magnetbleches durch Materialerhöhungslinien eines zweiten Magnetbleches ausgefüllt werden. Dies erhöht einerseits den Füllfaktor des Blechpaketes mit magnetisch wirksamem Material, insbesondere dem Material der zweiten Materialkomponente und es reduziert die Schwächung des Magnetbleches, die durch das Einbringen der Materialvertiefungslinien an der Grenzlinie auftritt.

Ein weiterer Bestandteil der Erfindung ist eine elektrische Maschine, die ein Blechpaket nach Patentanspruch 13 oder 14 umfasst. Eine derartige elektrische Maschine weist die Vorteile auf, die durch das Einbringen eines hochfesten Magnetbleches gemäß der vorangegangenen Ansprüche verbringt, die insbesondere darin bestehen, dass die magnetischen Eigenschaften des so dargestellten Magnetbleches bzw. da daraus resultierende Blechpaketes mit sich bringt. Die elektrische Maschine kann insbesondere ein Elektromotor oder ein Generator sein.

Weitere Ausgestaltungsformen der Erfindung und weitere Merkmale werden anhand der folgenden Figuren näher erläutert. Dabei handelt es sich um rein schematische Darstellungen, die keine Einschränkung des Schutzbereiches darstellen. Merkmale mit derselben Benennung, allerdings in unterschiedlichen Ausgestaltungsformen, werden dabei jeweils mit demselben Bezugszeichen versehen.

### Dabei zeigen,

- Figur 1: eine dreidimensionale Explosionszeichnung einer typischen elektrischen Maschine,
- Figur 2: ein Blechpaket, umfassend eine Vielzahl von zweikomponentigen Magnetblechen,
- Figur 3: eine Draufsicht eines zweikomponentigen Magnetbleches ähnlich der Ausgestaltung in Figur 2,
- Figur 4a: einen vergrößerten Ausschnitt aus Figur 3,
- Figur 4b: eine Vergrößerung des gestrichelten Kastens IV b,
- Figur 4c: eine Querschnittsdarstellung in schematischer Form entlang der Linie IV c,
- Figur 5a, b: eine analoge Darstellung wie in Figur 4b, c mit alternativen Ausgestaltungsformen,
- Figur 6a, b: eine alternative Ausgestaltungsform zu Figur 5,
- Figur 7a, b: eine weitere alternative Ausgestaltungsform zu Figur 6 mit Hinterschneidungen zwischen der ersten und zweiten Materialkomponente,

- Figur 8: eine schematische Darstellung einer möglichen Stapelreihenfolge von Querschnitten verschiedener Magnetbleche,
- Figur 9: eine schematische Darstellung eines Herstellungsverfahrens zur Herstellung eines zweikomponentigen Magnetbleches.

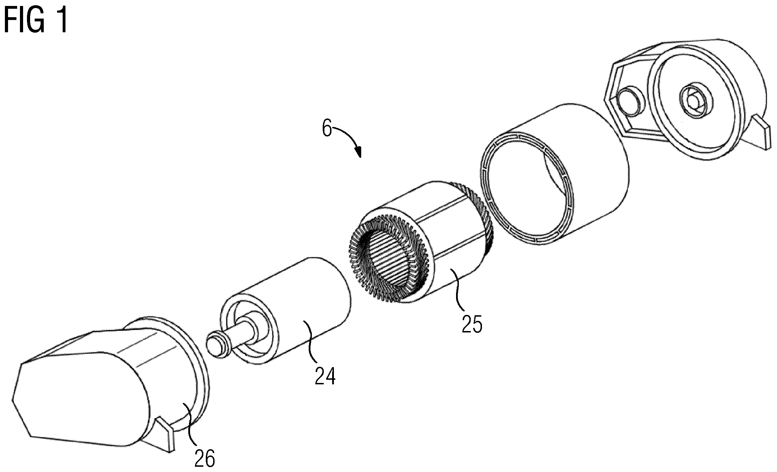

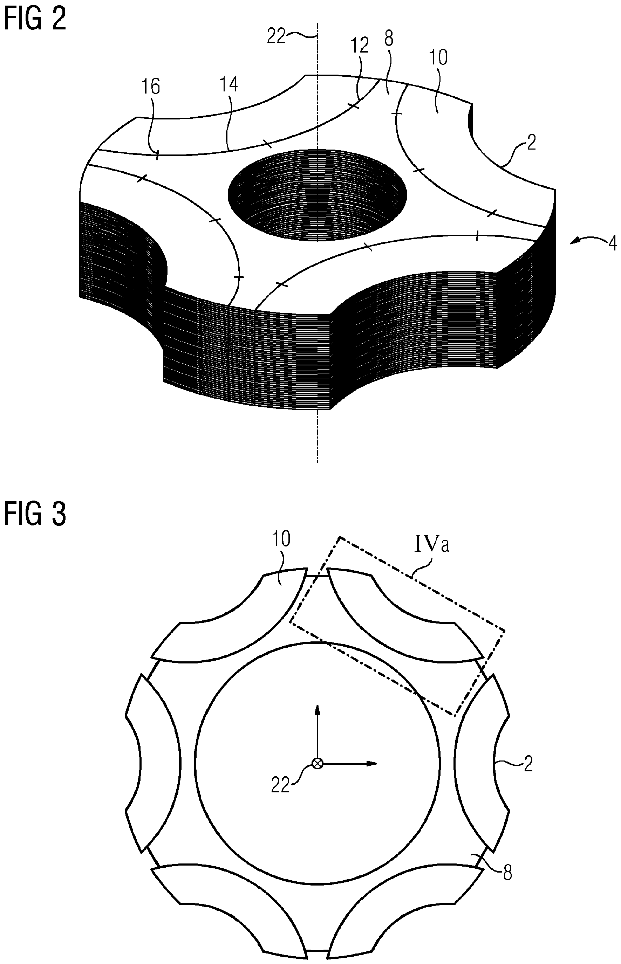

Zur besseren Einordnung des beschriebenen Magnetblechs 2 wird zunächst in Figur 1 eine Explosionsdarstellung einer elektrischen Maschine 6 gegeben. Diese umfasst einen Rotor 24, und einen Stator 25, die von einem Gehäuse 26 umgeben sind. Die elektrische Maschine 6 kann dabei ein Elektromotor oder auch ein Generator sein. Der Rotor 24 wiederum umfasst ein in Figur 1 nicht explizit dargestelltes Blechpaket 4, um das in bestimmter Weise elektrisch leitende Drähte als Spulen gelegt sind. Ein derartiges Blechpaket 4 ist beispielhaft in Figur 2 dargestellt. Das Blechpaket 4 nach Figur 2 weist einen Stapel einer Vielzahl von Magnetblechen 2 auf, wobei das Layout des Magnetblechs 2 so gestaltet ist, dass sich entsprechend Aussparungen und Nuten für die Leiterwicklung ergeben.

Die Magnetbleche 2, die in Figur 2 zu einem Blechpaket 4 gestapelt sind, weisen dabei zwei Materialkomponente 8, 10 auf. Dabei ist eine erste Materialkomponente 8 so ausgestaltet, dass sie bevorzugt einen hochlegierten, hochfesten Stahl, bevorzugt auf Basis einer Eisen-Chrom-Nickel-Legierung umfasst. Die erste Materialkomponente 8 ist dabei für die Festigkeit des Magnetblechs 2 ausschlaggebend. Hingegen weist die zweite Materialkomponente 10 insbesondere weichmagnetische Eigenschaften auf und zeigt eine besonders gute Ummagnetisierbarkeit. Sie umfasst im Idealfall Reineisen, das besonders gute weichmagnetische Eigenschaften aufweist. Der Eisenanteil der zweiten Materialkomponente 10 beträgt bevorzugt mindestens 97% und das Mikrogefüge der zweiten Materialkomponente 10 zeigt in der Regel bevorzugt ein ferritisches oder martensitisches Gefüge auf. Hingegen weist das Gefüge der ersten Materialkomponente 8 bevorzugt austenitische Strukturen auf.

Ferner sind in dem obersten Magnetblech 2 des Blechpaketes 4 entlang einer Grenzlinie 14 zwischen der ersten Materialkomponente 8 und der zweiten Materialkomponente 10 Materialvertiefungslinien 16 angedeutet, auf die in den nächsten Figuren noch näher eingegangen werden wird.

In Figur 3 ist eine Draufsicht auf ein ähnliches Magnetblech 2 gegeben, wie es bereits in Figur 2 anhand des Blechpaketes 4 dargestellt ist. Auch hier liegen zwei Materialkomponenten 8, 10 vor, die erste Materialkomponente 8 mit den hohen mechanischen Festigkeiten und die zweite Materialkomponente 10 mit den guten weichmagnetischen Festigkeiten. Das Layout des Magnetblechs 2 in Figur 3 unterscheidet sich von dem in Figur 2 dahingehend, dass anstatt vier Bereiche mit weichmagnetischen Materialkomponenten 10, hier sechs dieser Bereiche vorgesehen sind. Was jedoch beide Magnetbleche 2 in Figuren 2 und 3 gemeinsam ist, ist eine Rotationssymmetrie bezüglich einer Mittelachse 22, die auch mit einer Rotorachse der elektrischen Maschine gemäß Figur 1 zusammenfällt.

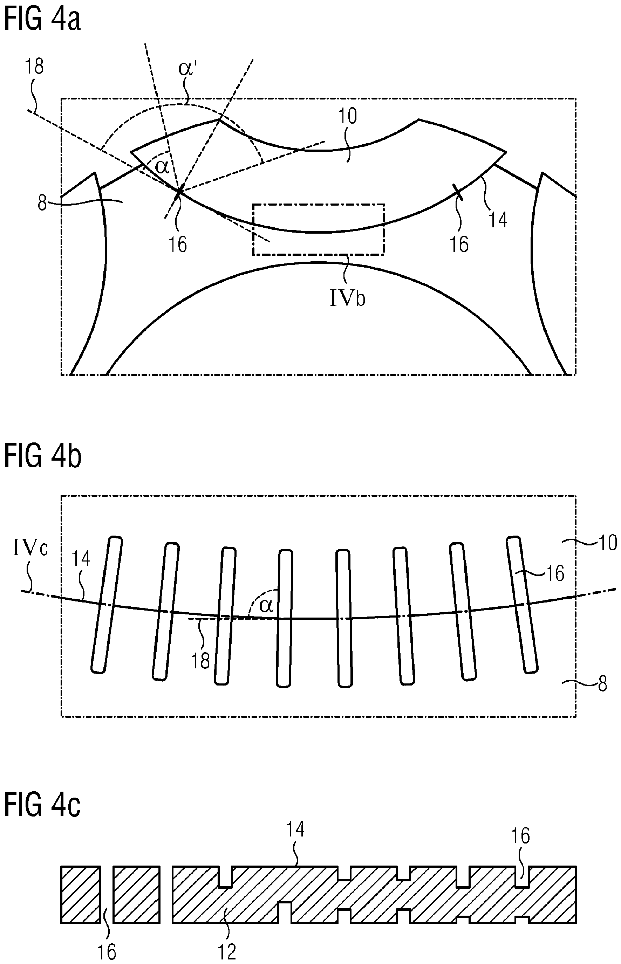

In Figur 4a ist eine vergrößerte Darstellung des Ausschnittes IV a aus der Figur 3 gegeben. Hierin sind exemplarisch Materialvertiefungslinien 16 dargestellt, die in einem weiteren vergrößerten Ausschnitt in Figur 4b weiter verdeutlicht sind. Die Figur 4c wiederum zeigt einen Querschnitt entlang der Linie IV c in Figur 4b.

Die erste Materialkomponente 8 und die zweite Materialkomponente 10 treffen, wenn man einen Querschnitt wie in der Figur 4 c betrachtet, in einer Grenzfläche 12 aufeinander. Dabei handelt es sich in der Realität bei der Grenzfläche 12 aufgrund verfahrenstechnischer Toleranzen und Begebenheiten in der Regel nicht um eine absolute diskrete Grenzfläche 12, vielmehr handele es sich um einen Übergangsbereich, bei dem aufgrund des Sinterprozesses Materialdiffusionsvorgänge stattfinden und somit den beschriebenen Übergangsbereich bilden. Bei einer Draufsicht auf das Magnetblech ergibt sich jedoch eine Grenzlinie 14, die entlang der Grenzfläche 12 zwischen den beiden Materialkomponenten 8, 10 verläuft. Diese Grenzlinien 14 werden von Materialvertiefungslinien 16, die von der ersten Materialkomponente 8 zur zweiten Materialkomponente 10 über die Grenzlinie 14 verlaufen, überschritten. Zur Definition des Verlaufs der Grenzlinien 16 wird zunächst eine Tangente 18 definiert, die an dem Punkt anliegt, an dem die Materialvertiefungslinie 16 die Grenzlinie 14 schneidet. Der Verlauf der Materialvertiefungslinie 16 ist bezüglich der Tangente 18 in der Regel senkrecht. Sie kann jedoch auch, wie in Figur 4a dargestellt ist, mit der Tangente 18 einen Winkel α bilden, der zwischen 45° und 135° beträgt. Bevorzugt liegt der Winkel α jedoch zwischen 85° und 95° bezüglich der Tangente 18.

Im Weiteren wird auf die Wirkung der Materialvertiefungslinie und deren Ausgestaltung eingegangen. In Figur 4b sind eine Vielzahl von Materialvertiefungslinien 16, die hier auch im Wesentlichen senkrecht zur Tangente 18 verlaufen, dargestellt, sodass der Winkel α in etwa 90° beträgt. Bei den Materialvertiefungslinien 16 gemäß Figur 4b kann es sich um Durchstanzungen des Magnetblechs 2 handeln, wie dies beispielsweise links in der Figur 4c anhand der Querschnittsdarstellung entlang der Linie IV c in Figur 4b zu erkennen ist. Andererseits kann es sich bei den Materialvertiefungslinien 16 auch um Teileinkerbungen handeln, wie diese ebenfalls in Figur 4c dargestellt ist.

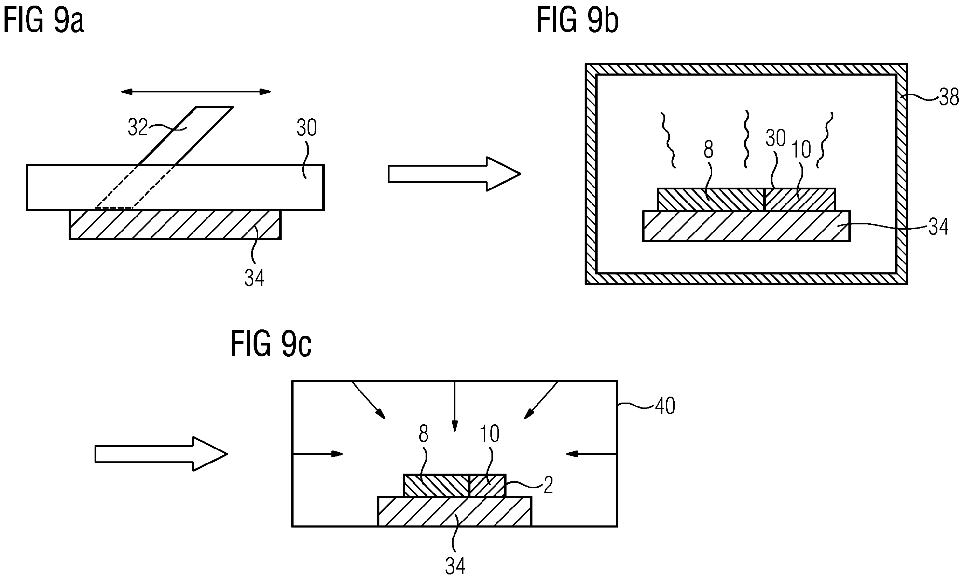

Auf die Herstellungstechnik des Magnetblechs 2 mit den beiden Materialkomponenten 8 und 10 wird noch gemäß Figur 9 näher eingegangen. Dabei wird beschrieben, dass es sich bei dem Magnetblech 2 um ein Sintermetall-Blech mit zwei Komponenten 8, 10 handelt. Beim Abkühlen dieses gesinterten zwei Komponentenblechs 2 werden aufgrund der unterschiedlichen thermischen Ausdehnungskoeffizienten der beiden Materialkomponenten 8, 10 thermomechanische Spannungen in der Grenzfläche 12 entlang der Grenzlinie 14 induziert. Durch die eingefügten Materialvertiefungslinien liegt nun an der Grenzlinie 14 eine geringere Materialdichte vor, was auch zu unterschiedlichen absoluten Ausdehnungen des Materials in diesem Bereich führt. Die auftretenden thermomechanischen Spannungen werden somit durch die Materialvertiefungslinien 16 analog eines Federelements zumindest teilweise kompensiert.

Die Materialvertiefungslinien gemäß Figur 4b und c sind dabei als gerade Linien mit rechteckigen Querschnitt dargestellt. Hierbei handelt es sich um eine vereinfachte Darstellung, die in der Praxis je nach Ausdehnungskoeffizient der einzelnen Materialkomponenten 8, 10 und je nach Layout des Magnetblechs 2 unterschiedlich ausgestaltet sein können. Für die genaue Berechnung der Form und des Verlaufes sowie der Länge und der Tiefe der Materialvertiefungslinien 16 wird bevorzugt eine Berechnungsmethode mittels eines Finite Elemente Verfahrens herangezogen, die auf den unterschiedlichen Parametern, also den Ausdehnungskoeffizienten und dem Layout des Magnetblechs 2 basiert.

Die beiden Materialkomponenten 8, 10 weisen unterschiedliche technische Eigenschaften auf. Die erste Materialkomponente umfasst insbesondere einen hochlegierten Chrom-Nickel-Stahl, der bevorzugt mehr als 25 Volumenprozent austenitisches Gefüge aufweist. Der Chromanteil weist dabei beispielsweise 25 Gewichtsprozent auf und der Nickelanteil liegt bei 7 Gewichtsprozent. Eine derartige Legierung ist eine Edelstahllegierung mit einer sehr hohen Festigkeit. Die erste Materialkomponente ist wie in den Figuren 2 und 3 zu erkennen ist, zentral im Inneren des Magnetblechs 2 angeordnet und trägt somit bei einer rotatorischen Bewegung am Rotor 24 die höchste Zugbelastung, die auf das Magnetblech 2 bzw. auf das daraus gebildete Blechpaket 4 wirken.

Die zweite Materialkomponente 10 hingegen ist bezüglich ihrer Werkstoffeigenschaften insbesondere auf die magnetischen Eigenschaften ausgerichtet. Das Material der zweiten Materialkomponente 10 ist im Idealfall aus Reineisen gebildet und weist dabei ein ferritisches und martensitisches Gefüge auf. Reineisen weist dabei die besten weichmagnetischen Eigenschaften auf und lässt sich diesbezüglich leicht umpolarisieren. Dies ist bei Wechselstrom-Motoren oder Generatoren von Bedeutung.

Die beiden unterschiedlichen Materialkomponenten 8,10 weisen, obwohl sie in der Regel aus Eisenlegierungen aufgebaut sind, dennoch einen gewissen Unterschied in ihrem elektrischen Ausdehnungskoeffizienten auf. Der Ausdehnungskoeffizient zwischen den einzelnen Eisenlegierungen kann je nach Legierungszusammensetzung beispielsweise zwischen 10 × 10 ⁻⁶ K ⁻¹ und 20 × 10⁻⁶ K⁻¹ liegen. Hinzukommt, dass eine Temperaturerhöhung von Raumtemperatur auf 200°C, was unter Umständen die Betriebstemperatur einer elektrischen Hochleistungsmaschine bei hohen Drehzahlen sein kann, ebenfalls zu einer Änderung des Ausdehnungskoeffizienten um 10 × 10⁻⁶ K⁻¹ führen kann. Dieser Unterschied zwischen den einzelnen Ausdehnungskoeffizienten je nach Materialzusammensetzung aber auch in Abhängigkeit vom Arbeitstemperaturbereich der Maschine führt zu erheblichen thermomechanischen Spannungen an der Grenzfläche 12 bzw. entlang der Grenzlinie 14 zwischen den einzelnen Materialkomponenten 8 und 10. Weitere hohe thermomechanische Spannungen treten wie bereits erwähnt, beim Abkühlen von der erforderlichen Sinter-Temperaturen auf.

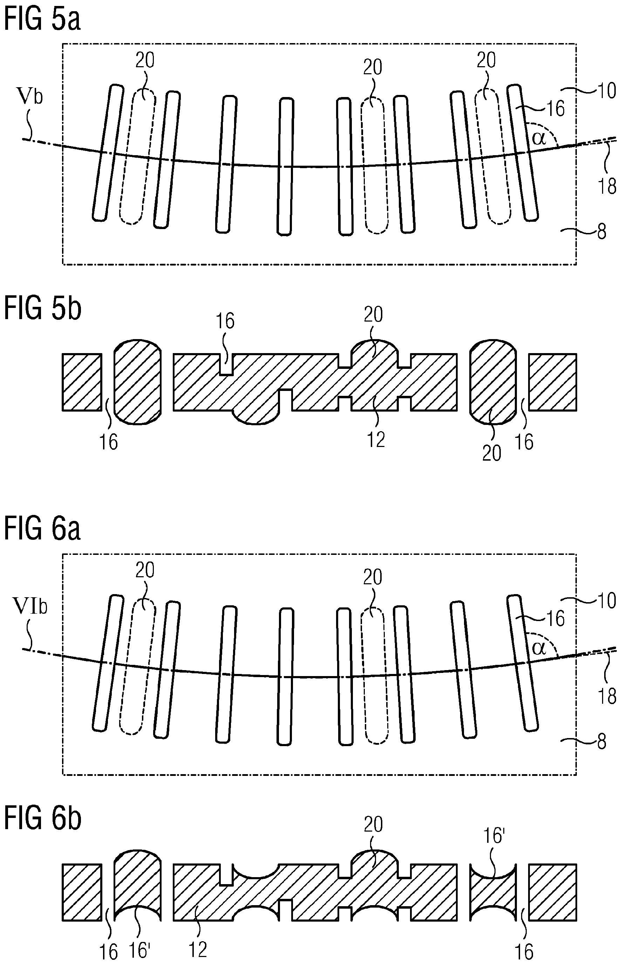

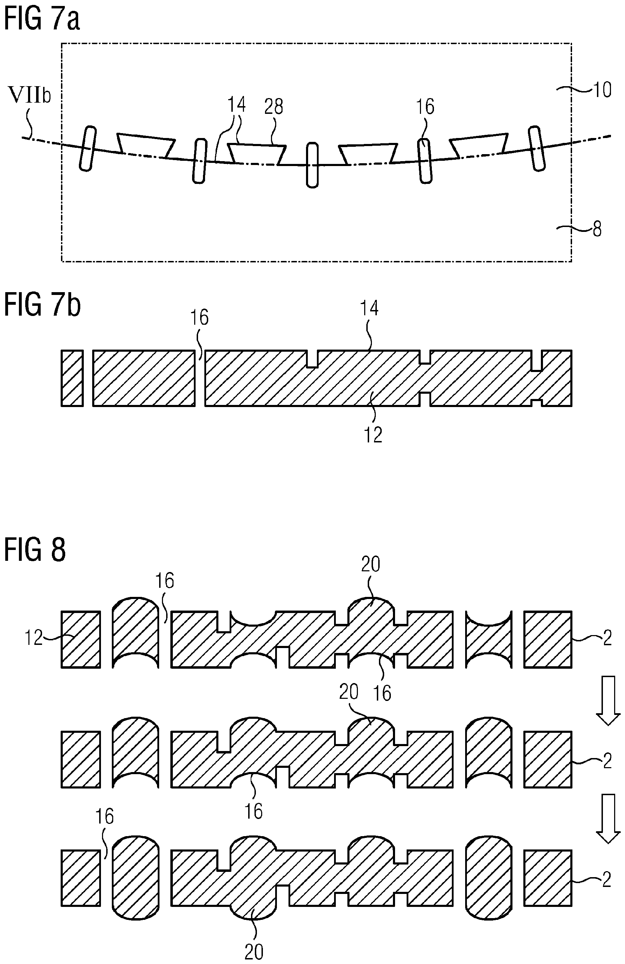

In den Figuren 5 und 6 sind analoge Darstellungen zu den Figuren 4b und c gegeben. In den Figuren 5a und 6a ist wieder eine Draufsicht auf einen entsprechenden Ausschnitt entlang einer Grenzlinie 14 zwischen den beiden Materialkomponenten 8, 10 gegeben. Es sind auch Materialerhöhungslinien 20 dargestellt, die in den korrespondierenden Querschnittsdarstellungen gemäß Figur 5b und 6b ebenfalls zu erkennen sind. Die Materialerhöhungslinien 20 können dabei dazu dienen, Materialschwächungen, die durch die Materialvertiefungslinien 16 hervorgerufen werden, zu kompensieren. Auf die Möglichkeit der Kompensation wird in Figur 8 eingegangen.

In Figur 8 ist eine Stapelfolge von Magnetblechen 2 dargestellt, wobei sich Materialerhöhungslinien 20 und Materialvertiefungslinien 16 in der Art ergänzen, dass eine Materialerhöhungslinie 20 eines ersten Magnetbleches 2 beim Stapeln zu einem Blechpaket 4 in eine Materialvertiefungslinie 16 eines zweiten Magnetbleches 2 einfügt. Auf diese Weise werden sowohl der Füllgrad des Blechpaketes 4 erhöht als auch eine mechanische Schwächung, die ggf. durch eine Materialvertiefungslinie 16 hervorgerufen werden kann, ausgeglichen. In den Figuren 5 und 6 sind weitere mögliche Querschnitte für Materialvertiefungslinien 16, die dort als 16' bezeichnet werden, dargestellt. Hierbei handelt es sich schematisch dargestellt um bauchige Vertiefungen, die in alternativer Form zu den rechteckigen Vertiefungen, wie sie in Figur 4c dargestellt sind, stehen. Welche Art der Materialvertiefungslinien 16 gewählt werden, hängt von Optimierungsberechnungen ab, die beispielsweise mit dem bereits beschriebenen Finite Elemente Verfahren durchgeführt werden können.

In Figur 7 ist eine weitere analoge Darstellung zu den Figuren 4 bis 6 gegeben, wobei hier neben den Materialvertiefungslinien 16 auch Hinterschneidungen 28 der Grenzlinie 14 dargestellt sind. Diese reichen dabei von der ersten Materialkomponente 8 mit der Hinterschneidung 28 in die zweite Materialkomponente 10 hinein. Bei den Hinterschneidungen 28 handelt es sich um eine besonders vorteilhafte Maßnahme, wenn die Hinterschneidung von der Materialkomponente gebildet wird, die den größeren thermischen Ausdehnungskoeffizienten von den beiden Materialkomponenten 8, 10 aufweist. Durch diese Maßnahme wird beim Kontrahieren der Materialkomponente, die die Hinterschneidung 28 bildet, eine Zugwirkung auf die jeweilig andere Materialkomponente 8, 10 hervorgerufen. Eine beidseitige Hinterschneidung, in den die Hinterschneidungen also von der jeweiligen einen die andere Materialkomponente 8,10 sich jeweils abwechseln, ist nicht so zweckmäßig, dass sich hierbei diese beschriebene Zugwirkung aufheben können.

Gemäß Figur 9 soll noch auf das Herstellungsverfahren eines entsprechenden Magnetbleches 2, das bisher beschrieben wird, eingegangen werden. Zur Herstellung des Magnetblechs 2 wird bevorzugt ein Schablonendruckverfahren angewendet, wobei eine Schablone 30 auf das Substrat 34 gesetzt wird und mittels eines Rakels 32 eine in Figur 9 nicht dargestellte Druckpaste auf das Substrat gedruckt wird. Die Schablone 30 weist dabei Öffnungen auf, durch die die Druckpaste auf das Substrat gepresst wird. Bevorzugt sind die Öffnungen der Schablone 30 mit einem Sieb versehen, weshalb auch häufig vom Siebdruckverfahren gesprochen wird. Dieser Druck erfolgt bei der Herstellung eines Zweikomponentenbleches zweimal mit unterschiedlichen Schablonen, sodass wie in Figur 9b dargestellt ist, ein zweikomponentiger Grünkörper 36 mit der ersten Materialkomponente 8 und der zweiten Materialkomponente 10 auf dem Substrat 34 hervorgeht. Diese wird insbesondere in einem Entbinderungsofen 38 von organischen Lösemitteln und Bindemitteln der Druckpaste befreit, die dabei thermisch zersetzt werden oder verdampfen. Der so erzeugte Grünkörper 36 wird nun in einem Sinterofen 40 gegeben. Im Sinterofen 40 liegt eine Sintertemperatur an, die so ausgewählt ist, dass zwischen funktionalen Partikeln der einzelnen Materialkomponenten 8, 10, also insbesondere metallischen Partikeln die aus den beschriebenen Legierungsbestandteilen bestehen, über Diffusionsprozesse Sinterverbindungen gebildet werden. Bei den Sintertemperaturen handelt es sich um Temperaturen, bei denen zwar partiell Schmelzphasen der einzelnen metallischen Partikel auftreten können, die jedoch unter der Schmelztemperatur der Metallpartikel liegt.

Das nach dem Sinterprozess abgekühlte Magnetblech 2 wird nun einer weiteren Bearbeitung zugeführt. Dabei können beispielsweise durch Stanzprozesse die Materialvertiefungslinien 16 eingeführt werden. Die Materialerhöhungslinien 20 können durch Deformationsprozesse eingebracht werden, sodass auf der einen Seite des Magnetblechs 2 eine Materialvertiefungslinie 16 entsteht und auf der anderen Seite eine korrespondierende Materialerhöhungslinie.

Es ist anzumerken, dass die Materialvertiefungslinien 16 und die Materialerhöhungslinien auch bereits im Grünkörper 36 eingebracht werden können. Dabei können die Materialerhöhungslinien vor den Sinterprozess auf den Grünkörper durch ein weiteres additives Verfahren aufgebracht werden. Sie können beispielsweise auch durch eine Schablone zusätzlich aufgesprüht oder aufgedruckt werden.

### Bezugszeichenliste

- 2: Magnetblech
- 4: Blechpaket
- 6: elektrische Maschine
- 8: erste Materialkomponente
- 10: zweite Materialkomponente
- 12: Grenzfläche
- 14: Grenzlinie
- 16: Materialvertiefungslinien
- 18: Tangente
- 20: Materialerhöhungslinie
- 22: Mittelachse
- 24: Rotor
- 25: Stator
- 26: Gehäuse
- 28: Hinterschneidung
- 30: Schablone
- 32: Rakel
- 34: Substrat
- 36: Grünkörper
- 38: Entbinderungsofen
- 40: Sinterofen
- α: Verlaufswinkel

## Patentansprüche

1. Additiv hergestelltes rotationssymmetrisches Magnetblech (2), für ein Blechpaket (4) einer elektrischen Maschine (6), wobei mindestens zwei in planarer Erstreckung voneinander getrennte Materialkomponenten (8, 10) vorliegen
- eine erste Materialkomponente (8) und eine zweite Materialkomponente (10) wobei
- die Materialkomponenten (8, 10) an einer Grenzfläche (12) aufeinander treffen die bei einer Betrachtung senkrecht zur Blechebene eine Grenzlinie (14) bildet
**dadurch gekennzeichnet, dass**
- Materialvertiefungslinien (16) in das Magnetblech (2) eingebracht sind, die von der ersten Materialkomponente (8) über die Grenzlinie (14) zur zweiten Materialkomponente (10) verlaufen
und deren Verlaufswinkel α bezüglich der Tangente (18) der Grenzlinie (14), an der die Materialvertiefungslinie (16) die Grenzlinie (14) schneidet, zwischen 45° und 135° liegt.

2. Magnetblech nach Anspruch 1, **dadurch gekennzeichnet, dass** Materialerhöhungslinien (20) in das Magnetblech (2) eingebracht sind, die von der ersten Materialkomponente (8) über die Grenzlinie (14) zur zweiten Materialkomponente (10) reichen
und deren Verlaufswinkel α' bezüglich der Tangente (18) der Grenzlinie (14), an der die Materialerhöhungslinie (20) die Grenzlinie (14) schneidet, zwischen 45° und 135° liegt.

3. Magnetblech nach Anspruch 1 oder 2, **dadurch gekennzeichnet, dass** Materialvertiefungslinien (16) variierende Tiefen aufweisen.

4. Magnetblech nach einem der vorhergehenden Ansprüche, **dadurch gekennzeichnet, dass** die Materialvertiefungslinien (16) eine Länge aufweisen, die zwischen 1 mm und 10 mm liegen.

5. Magnetblech nach einem der vorhergehenden Ansprüche, **dadurch gekennzeichnet, dass** die Grenzlinie (14) durch einer Materialkomponente (8, 10) so ausgeformt ist, dass sie eine Hinterschneidung in der anderen Materialkomponente (8, 10) bildet.

6. Magnetblech nach einem der vorhergehenden Ansprüche, **dadurch gekennzeichnet, dass** der Verlauf der Grenzlinie (14) bezüglich einer Mittelachse (22) des Magnetblechs (2) rotationssymmetrisch ausgestaltet ist.

7. Magnetblech nach einem der Ansprüche 1 bis 6, bei dem die erste Materialkomponente (8) eine Eisenlegierung umfasst, die zu mindestens 25 Vol. % ein austenitisches Gefüge aufweist.

8. Magnetblech nach einem der Ansprüche 1 bis 7, **dadurch gekennzeichnet, dass** die zweite Materialkomponente (10) eine Eisenlegierung umfasst, die mindestens 90 Gew. %, insbesondere mindestens 96 Gew. % Eisen, umfasst.

9. Magnetblech nach Anspruch 8, **dadurch gekennzeichnet, dass** die zweite Materialkomponente (10) eine ferritische oder martensitische Gefügestruktur aufweist.

10. Magnetblech nach einem der Ansprüche 1 bis 9, **dadurch gekennzeichnet, dass** die erste Materialkomponente (8) eine Chrom-Nickel-Legierung ist.

11. Magnetblech nach Anspruch 10, **dadurch gekennzeichnet, dass** die erste Materialkomponente (8) eine Eisen-Chrom-Legierung ist, mit einem Chromanteil, der zwischen 22 Gew. % und 28 Gew. %, insbesondere zwischen 24 Gew. % und 26 Gew. % beträgt.

12. Magnetblech nach Anspruch 9 oder 11, **dadurch gekennzeichnet, dass** die erste Materialkomponente (8) einen Nickelanteil aufweist, der zwischen 4 Gew. % und 10 Gew. %, insbesondere zwischen 6 Gew. % und 8 Gew. % beträgt.

13. Blechpaket für einen Rotor (24) einer elektrischen Maschine (6) umfassend eine Mehrzahl von Magnetblechen (2) nach einem der Ansprüche 1 bis 12.

14. Blechpaket nach Anspruch 13, **dadurch gekennzeichnet, dass** die Magnetbleche (2) in der Art gestapelt sind, dass Materialvertiefungslinien (16) eines ersten Magnetblechs (2) durch Materialerhöhungslinien (20) eines zweiten Magnetblechs (2') ausgefüllt werden.

15. Elektrische Maschine umfassend ein Blechpaket (4) nach Anspruch 12 bis 14.
